# EUROPÄISCHE PATENTANMELDUNG

(11) **EP 2 006 069 A2**
(43) Veröffentlichungstag der Anmeldung: **24.12.2008**
(21) Anmeldenummer: 08011139.6
(22) Anmeldetag: 19.06.2008
(51) Int. Cl.: B29C 45/57

(54) **Spritzgießverfahren und -vorrichtung mit nachrückendem Schieber**

(30) Priorität: 21.06.2007 DE 102007028690
(71) Anmelder: Schoeller Arca Systems GmbH, 82049 Pullach (DE)
(72) Erfinder: Gommer, Herman, 7761 DM Schoonebeek (NL)
(74) Vertreter: Bockhorni & Kollegen

(57) **Zusammenfassung**

Die Anmeldung betrifft ein Verfahren sowie eine Vorrichtung zum Durchführen eines Spritzgießverfahrens, bei dem ein Schieber (6) in der Spritzgießkavität dem Volumenschwund des auskühlenden bzw. sich verfestigenden Kunststoffmaterials nach geführt wird.

## Beschreibung

Die Erfindung betrifft ein Verfahren zum Herstellen eines Kunststoffteils mit einem Spritzgießverfahren gemäß den Merkmalen des Anspruches 1. Die Erfindung betrifft fernerhin eine Vorrichtung zum Spritzgießen gemäß den Merkmalen des Oberbegriffs des nebengeordneten Anspruchs.

Spritzgießverfahren und -vorrichtungen sind hinlänglich aus dem Stand der Technik bekannt. Hierbei wird ein geschmolzenes Kunststoffmaterial in eine Spritzgussform (Kavität) eingespritzt, in der dieses abkühlt, dabei verfestigt und die Form der Kavität abbildet. Bekanntermaßen problematisch bei solchen Spritzgießverfahren ist ein Volumenschwund beim Auskühlen und Verfestigen des Kunststoffmaterials,
d. h. beim Übergang von einer flüssigen bzw. teilflüssigen in eine starre Phase, der je nach verwendetem Kunststoffmaterial bis zu 20 % betragen kann. Ein solcher Volumenschwund ist insbesondere in Bereichen von Materialanhäufungen besonders hoch, wobei dies in der Regel auch jene Bereiche sind, die erhöhten Festigkeitsanforderungen gerecht werden sollen (beispielsweise sog. Last abtragende Elemente wie Versteifungsrippen, Griffverstärkungen etc.).

Um einen solchen Schwund beim Auskühlen (Abkühlen) und/oder Verfestigen (Erstarren) zu kompensieren, ist ein sog. Nachdrücken Stand der Technik. Hierbei wird geschmolzenes Kunststoffmaterial durch die Einspritzdüsen des Spritzgießwerkzeugs während der Auskühl- und Verfestigungsphase nachgepresst. Dies führt bekanntermaßen nicht immer zu optimalen Ergebnissen, da die Einspritzdüsen vorteilhafterweise in jenen Bereichen der Kavität anzuordnen sind, welche die festigkeitskritischen Elemente oder Bereiche des herzustellenden Kunststoffteils abbilden, was jedoch aus Platzgründen häufig nicht möglich ist. Andererseits führt der Volumenschwund zu Hohlräumen im erstarrenden Kunststoffmaterial (sog. Lunker), die nicht durch nachgepresstes, flüssiges Kunststoffmaterial auffüllbar sind, aber zu einer erheblichen Schwächung des festigkeitsrelevanten Bereichs im fertig hergestellten Kunststoffteil führen.

Aufgabe der Erfindung ist es, ein Verfahren und eine Vorrichtung anzugeben, mit denen sich ein Kunststoff-Spritzgießteil mit produktspezifischen festigkeitsrelevanten Bereichen optimiert herstellen lässt.

Diese Aufgabe wird gelöst durch ein Verfahren gemäß dem Anspruch 1 und durch eine Vorrichtung gemäß dem nebengeordneten Anspruch. Vorteilhafte Weiterbildungen sind Gegenstand der jeweils abhängigen Ansprüche.

Das erfindungsgemäße Verfahren umfasst wenigstens die folgenden Schritte:
- Bereitstellen einer Spritzgießform bzw. einer Spritzgießkavität,
- Einspritzen wenigstens eines Kunststoffmaterials in diese Kavität,
- Auskühlen bzw. Abkühlen und/oder Verfestigen bzw. Erstarren des Kunststoffmaterials in dieser Kavität,
- wobei vorgesehen ist, dass wenigstens ein Segment, das einem Flächenabschnitt der Kavität entspricht, beweglich ausgeführt ist und einem Volumenschwund des auskühlenden und/oder verfestigenden Kunststoffmaterials nachgeführt wird. Bevorzugt ist dieses bewegliche Segment als Schieber ausgebildet.

Der quasi nachgeführte Schieber ist erfindungsgemäß stets im Kontakt mit dem darunter in der Kavität befindlichen Kunststoffmaterial und trägt so zu einer kontinuierlichen Kühlung der Kunststoffschmelze bei, wodurch sich beispielsweise die kristallinen oder teilkristallinen Werkstoffstrukturen im erstarrenden Kunststoffmaterial besser ausbilden können. Damit wird auch eine höhere Festigkeit in dem betreffenden Bereich erzielt, sowie verringerte Eigenspannungen. Überraschenderweise hat sich auch ergeben, dass mit einem solchen Verfahren deutlich kürzere Zykluszeiten möglich sind (Verkürzungen bis zu mehr als 20 %).

Der Schieber wird speziell in jenen Bereichen der Kavität platziert, welche Bereiche mit hohen Festigkeitsanforderungen abbilden (oder sonstige kritische Stellen), beispielsweise dort, wo Materialströme beim Kavitätsfüllvorgang zusammenfließen oder aufeinander treffen. Eine solche kritische Stelle kann beispielsweise der Griffbereich eines Flaschenkastens sein, der als Durchgriffsöffnung in einer Seitenwandung ausgebildet ist. Die Anordnung des Schiebers, bzw. der Schieber, ist daher produktspezifisch.

Das erfindungsgemäße Verfahren ist insbesondere geeignet für kristalline oder teilkristalline Kunststoffmaterialien, vorzugsweise Polyolefine, insbesondere Polyethylen und Polypropylen, wobei es sich hierbei um solche Materialien handelt, die überwiegend auch für die Herstellung von Kunststoff-Flaschenkästen und Kunststoff-Paletten eingesetzt werden.

Bevorzugt ist vorgesehen, dass der Schieber beim Nachführen eine Druckkraft, insbesondere eine definierte Druckkraft, auf das darunter in der Kavität befindliche schwindende Kunststoffmaterial ausübt. Der quasi nachdrückende Schieber folgt sozusagen der auskühlenden und/oder verfestigenden Kunststoffschmelze und komprimiert diese dabei gleichzeitig und kontinuierlich, wodurch einerseits Lufteinschlüsse (Luftblasen und Lunker) vermieden werden, andererseits aber auch eine dichtere Packung der Kunststoff-Molekülketten erreicht wird, was eine hohe Festigkeit im betreffenden Bereich des Werkstücks (Kunststoffteil) bewirkt.

Mit einem solchen Verfahren können die kritischen Bereiche des Kunststoffteils daher beispielsweise schlanker dimensioniert werden, was Materialkosten und Gewicht einspart. Außerdem lassen sich im Bereich der Schieber bessere Oberflächenqualitäten erreichen.

Gemäß einer vorteilhaften Weiterbildung dieses Verfahrens ist vorgesehen, dass sich der Schieber beim Einspritzen des Kunststoffmaterials in die Kavität in einer zurückgesetzten Ausgangsposition befindet, die sich aus einem Sollmaß des Werkstücks in diesem Bereich plus einem Schwundaufmaß ergibt, so dass beim Einspritzen des Kunststoffmaterials ein anfängliches volumenmäßiges Überfüllen der Kavität mit dem Kunststoffmaterial im Bereich des Schiebers ermöglicht ist.

Damit kann in diesem Bereich mehr geschmolzenes Kunststoffmaterial eingebracht werden, als in eine herkömmliche Spritzgießform, womit der Schwund beim Auskühlen und/oder Verfestigen weniger Auswirkung auf die Festigkeit in diesem Bereich hat.

Hierbei ist es zudem vorteilhaft, dass der Schieber beim Auskühlen und/oder Verfestigen des Kunststoffmaterials aus seiner zurückgesetzten Ausgangsposition, unter Ausübung einer vorzugsweise definierten Druckkraft, in eine Endposition bewegt wird, wobei diese Endposition dem Sollmaß des Kunststoffteils in diesem Bereich entspricht.

Damit lässt sich, trotz dem Schwund beim Auskühlen und/oder Verfestigen, eine hohe Formgenauigkeit bzw. Dimensionsgenauigkeit herstellen, die sich zudem von Zyklus zu Zyklus nahezu exakt reproduzieren lässt (Dimensionsstabilität).

Bevorzugt wird der Schieber translatorisch entlang einer Bewegungsachse bzw. -bahn bewegt, die bevorzugt geradlinig ausgebildet ist, aber auch gekrümmt sein kann. Alternativ ist es möglich den Schieber beispielsweise über eine Drehung oder Kippung zu bewegen.

Bevorzugt erfolgt die Bewegung des Schiebers kraftgesteuert, insbesondere Kraft-Zeit gesteuert, kann aber auch weggesteuert erfolgen.

Beim Einspritzvorgang in die Kavität können selbstverständlich auch unterschiedliche Kunststoffmaterialien, dies bezieht sich auch auf farbliche Unterschiede, verwendet werden.

Bevorzugt dient das erfindungsgemäße Verfahren zur Herstellung eines Kunststoffkastens, wie beispielsweise einem Flaschenkasten, der wenigstens einen Griffbereich aufweist, wobei der Schieber dann in jenem Teil der Kavität angeordnet ist, der diesen Griffbereich ausbildet. Dadurch lässt sich, wie bereits oben dargelegt, ein Griffbereich mit hoher Festigkeit und bevorzugt auch mit hoher Dimensionsstabilität herstellen.

Bevorzugt dient das erfindungsgemäße Verfahren auch zur Herstellung einer Kunststoff-Palette mit zumindest abschnittsweise hochfesten Aufstandselementen (bspw. Kufen).

Die erfindungsgemäße Vorrichtung zum Spritzgießen, für die ggf. gesonderter Schutz beantragt wird, umfasst wenigstens eine Kavität zum Einspritzen wenigstens eines Kunststoffmaterials, wobei vorgesehen ist, dass wenigstens ein Segment bzw. ein Flächenabschnitt dieser Kavität beweglich und als Schieber ausgebildet ist.

Der Schieber der erfindungsgemäßen Vorrichtung ist dabei bevorzugt translatorisch beweglich angeordnet, insbesondere entlang einer geradlinigen Führungsbahn. Fernerhin sind bevorzugt Mittel zum Antreiben dieses Schiebers vorgesehen, insbesondere hydraulische und/oder pneumatische Mittel, wobei selbstverständlich auch elektromechanische Antriebsmittel vorgesehen sein können.

Die erfindungsgemäße Vorrichtung kann dabei selbstverständlich auch mehrere Schieber aufweisen, die in unterschiedlichen Bereichen der Kavität angeordnet sind.

Bevorzugt ist der Schieber prismatisch ausgebildet, wobei eine Begrenzungsfläche eines solchen Prismas gleichzeitig ein Segment, d. h. einen Flächenabschnitt oder einen Bereich, der Kavität ausbildet. Insbesondere ist bevorzugt, dass ein solcher prismatischer Schieber quaderartig ausgebildet ist, wobei eine Stirnfläche (Deckfläche) dieses Quaders das betreffende Segment der Kavität ausbildet, wobei ferner vorgesehen ist, dass wenigstens eine seitliche Mantelfläche dieses Quaders zur Lagerung und/oder Führung desselbigen in der Vorrichtung vorgesehen ist. Hierbei ist es insbesondere vorteilhaft, dass eine Längsachse des prismatischen bzw. quaderartigen Schiebers mit einer Bewegungsachse der Führungsbahn identisch ist, d. h. zusammenfällt.

Nachfolgend soll die Erfindung anhand eines Ausführungsbeispieles im Zusammenhang mit den Figuren näher erläutert werden.

Es zeigen:
- Fig. 1: eine Draufsicht auf ein geöffnetes erfindungsgemäßes Spritzgießwerkzeug;
- Fig. 2: eine Teilschnittansicht gemäß dem Schnittverlauf B-B nach Fig. 1, wobei sich die Schieber in einer Ausgangsposition befinden; und
- Fig. 3: die Schnittansicht gemäß Fig. 2, wobei sich die Schieber in einer Endposition befinden.

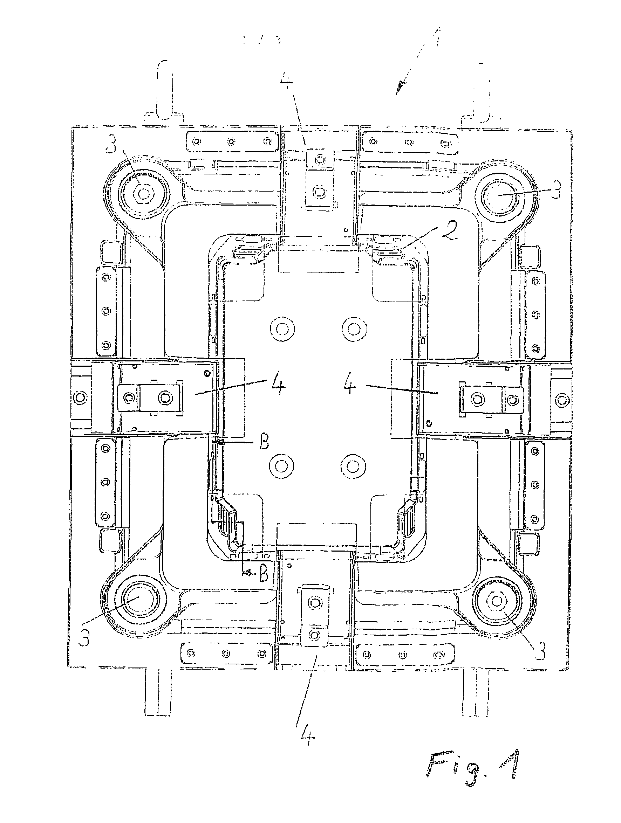

Fig. 1 zeigt ein geöffnetes Spritzgießwerkzeug (Vorrichtung) 1 zur Herstellung eines Kunststoffkastens (Kunststoffteil) 2. Das Werkzeug weist mehrere Führungen 3 auf, um die Werkzeughälften beim Öffnen und Schließen gegeneinander auszurichten. Fernerhin weist das Werkzeug 1 mehrere sog. Kerne 4 auf, die zur Ausbildung von Griffmulden bzw. Grifflöchern (sog. Hohlkonturen) in der Seitenwandung des herzustellenden Kunststoffkastens dienen und nach dem Spritzgießvorgang in eine zurückgefahrene Position bewegt werden, um den Kunststoffkasten 2 aus dem Werkzeug 1 entnehmen zu können.

Kritische Bereiche des herzustellenden Kunststoffkastens 2 sind jeweils beidseitig den Grifföffnungen in der Seitenwandung, da hier beim Heben insbesondere schwer beladener Kunststoffkästen Spannungsspitzen auftreten. Fernerhin sind auch die Eckbereiche des herzustellenden Kunststoffkastens 2 als kritische Bereiche anzusehen, da diese insbesondere beim Stapeln der beladenen Kunststoffkästen eine Last abtragende Funktion haben und zudem Stößen beim Handling ausgesetzt sind.

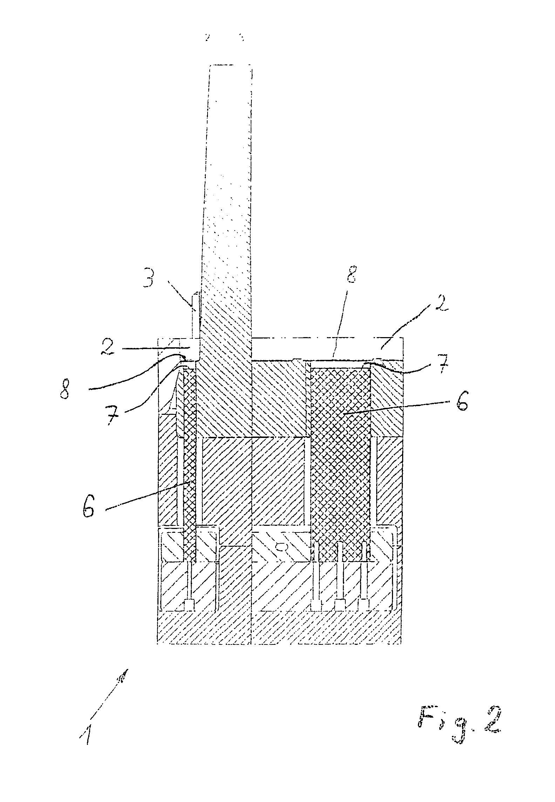

Das erfindungsgemäße Herstellungsverfahren bzw. -vorrichtung setzen daher insbesondere in diesen kritischen Bereichen an. Hierzu sind im Werkzeug 1 mehrere sog. Schieber 6 angeordnet, was sich aus der Fig. 2 ergibt, die einen Teilschnitt gemäß dem Schnittverlauf B-B nach Fig. 1 wiedergibt. Die Schieber 6 sind quaderförmig (quaderartig) ausgebildet und gemäß der Darstellung in Fig. 2 vertikal bewegbar. Die Mittel zum Bewegen der Schieber 6 sind in den Figuren nicht explizit dargestellt. Die Schieber 6 weisen eine Stirnfläche 7 auf, welche einen Teil (Segment- bzw. Flächenabschnitt) der Kavität der Spritzgießform mit ausbilden.

Wie in Fig. 2 gezeigt, befinden sich die Schieber 6 in einer zurückgesetzten Ausgangsposition, wobei deren Stirnflächen 7 von einer Soll-Linie 8, welche der Fertig-Kunststoffteil-Geometrie entspricht, (nach unten) zurückversetzt sind. Dies entspricht dem Zustand, in dem die Spritzgießkavität mit dem Kunststoffmaterial (bzw. den Kunststoffmaterialien) befüllt wird.

Während dem Auskühl- und/oder Verfestigungsvorgang des eingespritzten Kunststoffmaterials kommt es zu einem Volumenschwund (Schrumpfung), der insbesondere im Bereich der Schieber 6 hoch ist, da in diesen Bereichen verhältnismäßig viel Kunststoffmaterial in die Kavität eingebracht wurde. Im Bereich der Schieber 6 kann die Kunststoffkavität sozusagen mit mehr Kunststoffmasse befüllt werden. Während diesem Volumenschwund rücken gleichzeitig die Schieber 6 idealerweise kraftbeaufschlagt nach und drücken auf das schwindende Kunststoffmaterial. Hierbei wird der Volumenschwindungsvorgang gewollt beeinflusst und vergleich-mäßigt, zudem werden Lufteinschlüsse im Kunststoffmaterial sozusagen herausgedrückt, was quasi zu einer Komprimierung des Kunststoffmaterials im Bereich der Schieber 6 führt. Im Ergebnis ist die Festigkeit des hergestellten Kunststoffteils in den Bereichen der Schieber 6 außergewöhnlich hoch.

Fernerhin kann bei einer entsprechenden Kühlung der Schieber 6 die Abkühlzeit bzw. Verfestigungszeit für das herzustellende Kunststoffteil deutlich verringert werden, was zu einer höheren Ausbringung (Stückzahl) führt.

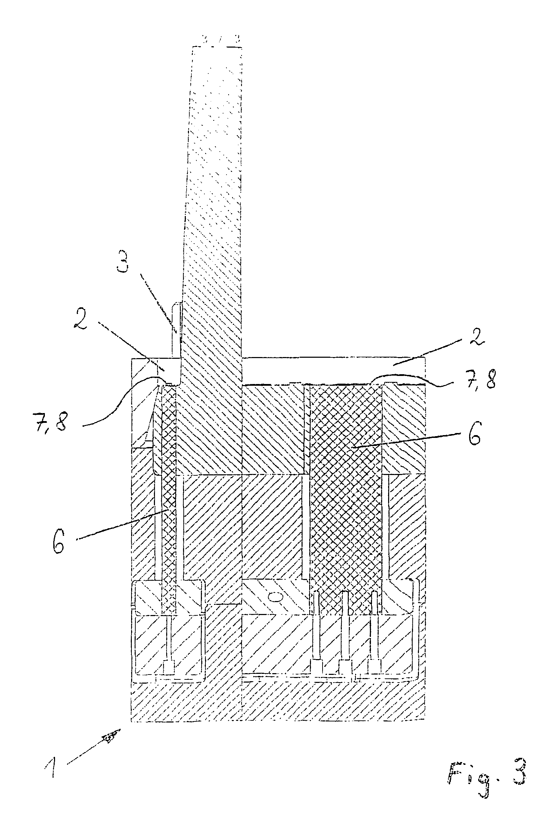

Fig. 3 zeigt den Endzustand, in dem die Schieber 6 bis zur Soll-Linie 8 ausgefahren sind, wobei die Soll-Linie 8 der gewünschten Geometrie des herzustellenden Kunststoffteils (Kastens) in diesem Bereich entspricht. Somit lassen sich mit dem erfindungsgemäßen Verfahren und auch mit der erfindungsgemäßen Vorrichtung Kunststoffteile mit hoher Formgenauigkeit bzw. Dimensionsgenauigkeit herstellen, wobei sich diese Genauigkeit zudem von Zyklus zu Zyklus nahezu exakt wiederholen lässt (Dimensionsstabilität).

Wie sich ebenfalls aus den Fig. 2 und 3 ergibt, sind die blockartigen (quaderförmigen) Schieber 6 über ihre Mantelflächen, bzw. einem Abschnitt ihrer Mantelflächen, im Werkzeug 1 geführt. Die Bewegungsmittel können bspw. hydraulischer, pneumatischer und/oder elektromechanischer Art sein. Die Steuerung und/oder Regelung der Schieber erfolgt über eine Kraft-Vorgabe, Kraft-Weg-Vorgabe, Weg-Zeit-Vorgabe oder dgl., wobei sich der Verfahrweg im Wesentlichen aus dem Schwundmaß ergibt. Der Verfahrweg ist zudem einstellbar. Sind mehrere Schieber 6 im Werkzeug 1 umfasst, so kann die Steuerung einheitlich oder separat erfolgen.

## Patentansprüche

1. Verfahren zum Herstellen eines Kunststoffteils, insbesondere aus wenigstens einem kristallinen oder teilkristallinen Kunststoffmaterial, umfassend wenigstens die folgenden Schritte:
- Bereitstellen einer Spritzgießkavität,
- Einspritzen wenigstens eines Kunststoffmaterials in diese Kavität,
- Auskühlen und/oder Verfestigen des Kunststoffmaterials in dieser Kavität,
**dadurch gekennzeichnet, dass**
- wenigstens ein Segment der Kavität beweglich ist und einem Volumenschwund des auskühlenden und/oder verfestigenden Kunststoffmaterials nachgeführt wird.

2. Verfahren nach Anspruch 1,
**dadurch gekennzeichnet, dass**
das bewegliche Segment als Schieber ausgebildet ist und der beim Nachführen eine definierte Druckkraft auf das darunter befindliche schwindende Kunststoffmaterial ausübt.

3. Verfahren nach Anspruch 1 oder 2,
**dadurch gekennzeichnet, dass**
sich der Schieber beim Einspritzen des Kunststoffmaterials in einer zurückgesetzten Ausgangsposition befindet, die sich aus einem Sollmaß plus einem Schwundmaß bestimmt, so dass ein anfängliches Überfüllen der Kavität mit dem Kunststoffmaterial im Bereich des Schiebers ermöglicht wird.

4. Verfahren nach Anspruch 3,
**dadurch gekennzeichnet, dass**
der Schieber beim Auskühlen und/oder Verfestigen des Kunststoffmaterials aus seiner zurückgesetzten Ausgangsposition, unter Ausübung einer definierten Druckkraft, in eine Endposition bewegt wird, wobei die Endposition dem Sollmaß des herzustellenden Kunststoffteils in diesem Bereich entspricht.

5. Verfahren nach einem der vorausgehenden Ansprüche,
**dadurch gekennzeichnet, dass**
der Schieber translatorisch entlang einer geraden Bewegungsbahn bewegt wird.

6. Verfahren nach einem der vorausgehenden Ansprüche,
**dadurch gekennzeichnet, dass**
die Bewegung des Schiebers kraftgesteuert erfolgt.

7. Verfahren nach einem der vorausgehenden Ansprüche,
**dadurch gekennzeichnet, dass**
mehrere unterschiedliche Kunststoffmaterialien für die Herstellung des Kunststoffteils verwendet werden.

8. Verfahren nach einem der vorausgehenden Ansprüche zur Herstellung eines Kunststoffkastens mit wenigstens einem Griffbereich, wobei das bewegliche Segment oder der Schieber in jenem Teil der Kavität angeordnet ist, der diesen Griffbereich ausbildet.

9. Vorrichtung zum Spritzgießen wenigstens eines Kunststoffmaterials, insbesondere zur Durchführung eines Verfahrens gemäß einem der vorausgehenden Ansprüche, mit einer Kavität zum Einspritzen des Kunststoffmaterials,
**dadurch gekennzeichnet, dass**
wenigstens ein Segment der Kavität beweglich und als Schieber ausgebildet ist.

10. Vorrichtung nach Anspruch 9,
**dadurch gekennzeichnet, dass**
der Schieber translatorisch beweglich angeordnet ist, und eine Bewegung insbesondere entlang einer geradlinigen Führungsbahn gegeben ist.

11. Vorrichtung nach Anspruch 9 oder 10,
**gekennzeichnet durch**
Mittel zum Antreiben des Schiebers, insbesondere hydraulische Mittel.

12. Vorrichtung nach einem der Ansprüche 9 bis 11, und insbesondere nach Anspruch 10,
**dadurch gekennzeichnet, dass**
der Schieber prismatisch ausgebildet ist, wobei eine Begrenzungsfläche dieses Schiebers ein Segment der Kavität ausbildet.

13. Vorrichtung nach Anspruch 12,
**dadurch gekennzeichnet, dass**
der Schieber quaderartig ausgebildet ist, wobei eine Stirnfläche dieses Quaders ein Segment der Kavität ausbildet, und wobei ferner wenigstens eine seitliche Mantelfläche dieses Quaders zur Lagerung und/oder Führung in der Vorrichtung vorgesehen ist.

14. Vorrichtung nach Anspruch 12 oder Anspruch 13,
**dadurch gekennzeichnet, dass**
eine Längsachse des prismatischen, insbesondere quaderartigen, Schiebers mit einer Bewegungsachse der Führungsbahn identisch ist.

15. Vorrichtung nach einem der Ansprüche 9 bis 14,
**dadurch gekennzeichnet, dass**
mehrere Schieber in unterschiedlichen Bereichen der Kavität umfasst sind.
